# EUROPEAN PATENT SPECIFICATION

(11) **EP 3 736 239 B1**
(45) Date of publication and mention of the grant of the patent: **25.01.2023**
(21) Application number: 19215019.1
(22) Date of filing: 10.12.2019
(51) Int. Cl.: B66B 13/14, B66B 1/24

(54) **SELF-TUNING DOOR TIMING PARAMETERS**
SELBSTABSTIMMENDE TÜR-TIMING-PARAMETER
PARAMÈTRES DE SYNCHRONISATION DE PORTE À RÉGLAGE AUTOMATIQUE

(30) Priority: 06.05.2019 US 201916404074
(43) Date of publication of application: 11.11.2020
(73) Proprietor: Otis Elevator Company, Farmington, Connecticut 06032 (US)
(72) Inventor: HSU, Arthur, Farmington, CT Connecticut 06032 (US)
(74) Representative: Dehns

(56) References cited:
- WO-A1-2007/066390
- JP-A- 2002 220 177
- US-A1- 2013 284 542

## Description

### BACKGROUND

The subject matter disclosed herein generally relates to automatic doors and, more particularly, to self-tuning automatic door timing parameters.

Deciding the length of time that an automatic door (i.e., a door that is automatically actuated to open and close) should remain open is typically dependent on parameter settings that are manually configured for the layout at or near the automatic door. Automatic doors are utilized in a variety of applications such as, for example, an elevator door for an elevator car. For an elevator system, keeping an elevator door open for too long of a time period will affect the throughput of the elevator. Keeping the elevator door open for too short of a time period will cause passengers to miss their assigned elevator car. In addition, the elevator door may start to close before a passenger has passed through the doors which may cause the elevator door to strike the passenger or cause the door to reverse and re-open which causes additional delay. These issues can affect the customer experience. Also, buildings may have different floor layouts at different floors for each elevator location that will affect how long it takes for passengers to reach their assigned elevator car thus not allowing for a universal time period calculation. For example, building lobbies tend to be larger and have more decorations (i.e., obstructions) that can increase the time it takes for a passenger to reach different elevator cars. JP 2002 220177 discloses an elevator operation control system comprising an elevator nonresponse time detecting means, a door-opened time controlling means and a hall arrival detecting means.

### BRIEF DESCRIPTION

According to one aspect of the invention there is provided an automatic door tuning system in accordance with claim 1.

In some embodiments the controller is further configured to: responsive to determining that the association exists between the at least one transfer and the request, storing the duration of time.

In some embodiments the controller is further configured to: responsive to determining that the association does not exists between the at least one transfer and the request, discarding the duration of time.

In some embodiments the determining whether the at least one transfer is associated with the request comprises: determining, by the at least one sensor, a direction of the at least one transfer; and associating the at least one transfer with the request based on a determination that the direction of the least one transfer comprises an ingress transfer for the automatic door, wherein the ingress transfer comprises a transfer in a direction opposite a side of the automatic door where the request originated.

In some embodiments the controller is further configured to: receive a second request to open the automatic door, the second request inputted to the first interface at the first location; operate the automatic door to open and remain open at least until an expiration of the adjusted transfer allowance time; determine an occurrence of a second transfer associated with the automatic door, wherein the second transfer occurs at a second time point; determine whether an association exists between the second transfer and the second request; determine a second duration of time between the second request and the second time point of the second transfer; and determine a second adjusted transfer time allowance based at least in part on the second duration of time, wherein the second adjusted transfer time allowance is associated with the first interface.

In some embodiments the controller is further configured to: determine identifying information of a requestor associated with the request to open the automatic door; associate the adjusted transfer time allowance with the requestor.

In some embodiments determining the identifying information of the requestor associated with the request comprises: obtaining, by a camera, image data associated with the requestor; and analyzing, utilizing a facial recognition algorithm, the image data associated with the requestor to determine the identifying information.

In some embodiments determining the identifying information of the requestor associated with the request comprises: analyzing an input mechanism associated with the request at the first interface, wherein the input mechanism comprises an identification badge associated with the requestor; and determining the identifying information of the requested based at least in part on the input mechanism.

In some embodiments the first interface comprises a kiosk.

In some embodiments the automatic door comprises an elevator car door for an elevator car in an elevator system.

In some embodiments the at least one sensor comprises at least one of a light sensor, a pressure sensor, a three-dimensional depth sensor, a passive infrared sensor, an acoustic sensor, a radar sensor, a near-field capacitance sensor, a proximity sensing of wireless communication signals sensor, and a camera.

In some embodiments the controller is further configured to: control operation of the elevator car based at least in part on the adjusted transfer time allowance.

According to another aspect of the invention there is provided a method for tuning an automatic door in accordance with claim 13.

In some embodiments the method further comprises: responsive to determining that the association exists between the at least one transfer and the request, storing the duration of time.

In some embodiments the method further comprises: responsive to determining that the association does not exists between the at least one transfer and the request, discarding the duration of time.

In some embodiments the determining whether the at least one transfer is associated with the request comprises: determining, by the at least one sensor, a direction of the at least one transfer; and associating the at least one transfer with the request based on a determination that the direction of the least one transfer comprises an ingress transfer for the automatic door, wherein the ingress transfer comprises a transfer in a direction opposite a side of the automatic door where the request originated.

In some embodiments the method further comprises: determine identifying information of a requestor associated with the request to open the automatic door; associate the adjusted transfer time allowance with the requestor.

In some embodiments determining the identifying information of the requestor associated with the request comprises: obtaining, by a camera, image data associated with the requestor; and analyzing, utilizing a facial recognition algorithm, the image data associated with the requestor to determine the identifying information.

In some embodiments the first interface comprises at least one of a kiosk and a user device.

In some embodiments the at least one sensor comprises at least one of a light sensor, a pressure sensor, a three-dimensional depth sensor, a passive infrared sensor, an acoustic sensor, a radar sensor, a near-field capacitance sensor, a proximity sensing of wireless communication signals sensor, and a camera.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the disclosure;
FIG. 2 depicts a block diagram of a computer system for use in implementing one or more embodiments of the disclosure;
FIG. 3 depicts a block diagram of an elevator system according to one or more embodiments of the invention;
FIG. 4 depicts a flow diagram of a method for tuning an automatic door according to one or more embodiments of the invention; and
FIG. 5 depicts a flow diagram of another method for tuning an automatic door according to one or more embodiments.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

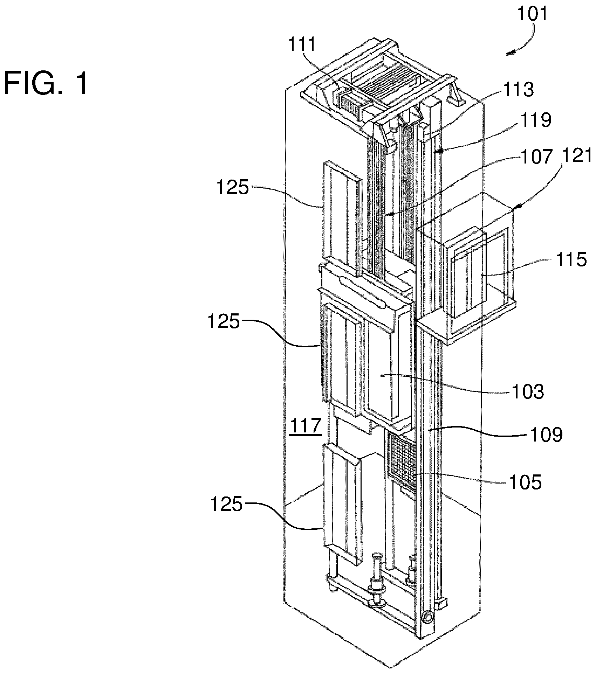

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems that employ other methods and mechanisms of moving an elevator car within an elevator shaft, such as hydraulic and/or ropeless elevators, may employ embodiments of the present disclosure. FIG. 1 is merely a non-limiting example presented for illustrative and explanatory purposes.

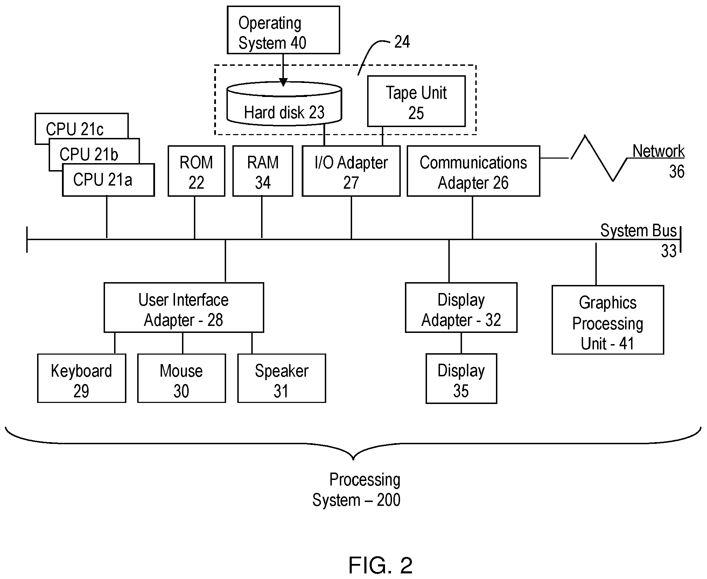

Referring to FIG. 2, there is shown an embodiment of a processing system 200 for implementing the teachings herein. In this embodiment, the system 200 has one or more central processing units (processors) 21a, 21b, 21c, etc. (collectively or generically referred to as processor(s) 21). In one or more embodiments, each processor 21 may include a reduced instruction set computer (RISC) microprocessor. Processors 21 are coupled to system memory 34 (RAM) and various other components via a system bus 33. Read only memory (ROM) 22 is coupled to the system bus 33 and may include a basic input/output system (BIOS), which controls certain basic functions of system 200.

FIG. 2 further depicts an input/output (I/O) adapter 27 and a network adapter 26 coupled to the system bus 33. I/O adapter 27 may be a small computer system interface (SCSI) adapter that communicates with a hard disk 23 and/or tape storage drive 25 or any other similar component. I/O adapter 27, hard disk 23, and tape storage device 25 are collectively referred to herein as mass storage 24. Operating system 40 for execution on the processing system 200 may be stored in mass storage 24. A network communications adapter 26 interconnects bus 33 with an outside network 36 enabling data processing system 200 to communicate with other such systems. A screen (e.g., a display monitor) 35 is connected to system bus 33 by display adaptor 32, which may include a graphics adapter to improve the performance of graphics intensive applications and a video controller. In one embodiment, adapters 27, 26, and 32 may be connected to one or more I/O busses that are connected to system bus 33 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 33 via user interface adapter 28 and display adapter 32. A keyboard 29, mouse 30, and speaker 31 all interconnected to bus 33 via user interface adapter 28, which may include, for example, a Super I/O chip integrating multiple device adapters into a single integrated circuit.

In exemplary embodiments, the processing system 200 includes a graphics processing unit 41. Graphics processing unit 41 is a specialized electronic circuit designed to manipulate and alter memory to accelerate the creation of images in a frame buffer intended for output to a display. In general, graphics processing unit 41 is very efficient at manipulating computer graphics and image processing and has a highly parallel structure that makes it more effective than general-purpose CPUs for algorithms where processing of large blocks of data is done in parallel. The processing system 200 described herein is merely exemplary and not intended to limit the application, uses, and/or technical scope of the present disclosure, which can be embodied in various forms known in the art.

Thus, as configured in FIG. 2, the system 200 includes processing capability in the form of processors 21, storage capability including system memory 34 and mass storage 24, input means such as keyboard 29 and mouse 30, and output capability including speaker 31 and display 35. In one embodiment, a portion of system memory 34 and mass storage 24 collectively store an operating system coordinate the functions of the various components shown in FIG. 2. FIG. 2 is merely a non-limiting example presented for illustrative and explanatory purposes.

Turning now to an overview of technologies that are more specifically relevant to aspects of the disclosure, elevator door open time duration can affect passenger throughput and experience. As noted above, keeping the elevator doors open for too long will slow down operation of the elevator car and thus the elevator system. This slowdown is the additional time that the doors are held open which causes a delay to all passengers inside the elevator travelling to their destination as well as any passengers waiting for the elevator on other floors, for example. Also, keeping the elevator doors open for too short a period of time will cause passengers to miss their called elevator car. In addition, the elevator door may start to close before a passenger has passed through the doors which may cause the elevator door to strike the passenger or cause the door to reverse and re-open which causes additional delay. A fixed elevator door open duration time does not address other factors associated with an elevator car such as, for example, lobby or floor configuration, distance from elevator call button or kiosk to the called elevator car, and average walking speed of passengers for a particular building to traverse a floor/lobby to get to an elevator car. In this example, a kiosk refers to a terminal at an elevator lobby where passengers enter their call for elevator service, particularly in a destination entry interface system where the passenger enters their destination floor at the kiosk, which then displays which elevator that the passenger should take.

Utilizing door sensing technology, aspects of the present disclosure address the issue of elevator car (or any automatic door) open duration times by providing a self-tuning automatic door configured to adjust the open duration times. This self-adjusting automatic door system is configured to self-tune the automatic door timing parameters by sensing a passenger transfer (e.g., by a door detector light beam or the like). A passenger transfer is the movement of a passenger through the automatic door either entering an elevator car or leaving an elevator car. When an elevator door opens, the system can monitor the door open time and the time of each passenger transfer and determine a time interval for when the door opens until the last passenger transfer occurs. In addition, the system can monitor if the doors close too early and a passenger transfer causes the doors to reverse and re-open. As a number of these time intervals are collected and the number of door reversals is monitored, the system can analyze this information to determine whether the door open time needs to be adjusted. Timing intervals can be associated with a particular floor or a particular elevator bank based on the number of passengers expected to board and de-board an elevator car, an identifier of the fixture used to enter a new call (input to an elevator call button, kiosk, phone app, etc.), the incidence and timing of call button pushes, prevailing traffic conditions of the elevator system locations, and/or time of day. Each time an elevator call is received and the corresponding passenger transfer is detected represents an opportunity to learn if the time to close the doors was too early or too late. If consistently passenger transfers are occurring during the early part of the door cycle, the door open time interval probably should be reduced. Conversely, if many passenger transfers occur near or later than the planned door close time, or if there are Door Open button pushes or door reversals, the door open time interval should probably be extended. Another example is when the number of passenger transfers detected (e.g., by a sensor, such as a light beam sensor) is correlated with the number of calls assigned to a car - in this case, if there is one call assigned and a passenger already boarded, it may be worth closing the doors immediately and, therefore, short of the default door timing; on the other hand, if fewer passengers have boarded than assigned, the system can extend the door open time beyond the default door timing. In this example, passenger assignment can be done through the use of a kiosk or assigned by an attendant. With a kiosk, a one or more passengers may call an elevator and indicate the number of people in their group and their desired floor. In some embodiments, a passenger may call an elevator utilizing a kiosk or a call button and a passenger sensing system can detect the size of the group travelling together associated with the elevator car. An elevator dispatching system that is utilized with the kiosk and elevator system can assign the group of passengers to a specific elevator car. In another example, an elevator system can employ a hall call system that allows passengers to call an elevator car utilizing a device such as a smart phone. In one or more embodiments, the sensor can be any type of sensor for determining a passenger transfer either into or exiting an elevator car. For example, the sensor can be a pressure sensor, a sensor for determining the load weight of the elevator car, a light beam sensor, a camera, a three dimensional imaging sensor, LIDAR sensors, time-of-flight sensors, structured light sensors, and the like. In one or more embodiments, the sensor can be utilized to detect the direction of a passenger/object transferring through the automatic doors. With this sensor, the association between passengers that call the elevator and the corresponding passengers that pass through the doors can be stronger because the system can ignore the passenger transfers that result from passengers exiting the elevator car. That is to say, sensing the directionality of a passenger transfer allows the system to focus on boarding passengers and have less emphasis on passengers that are de-boarding when analyzing the door open time interval.

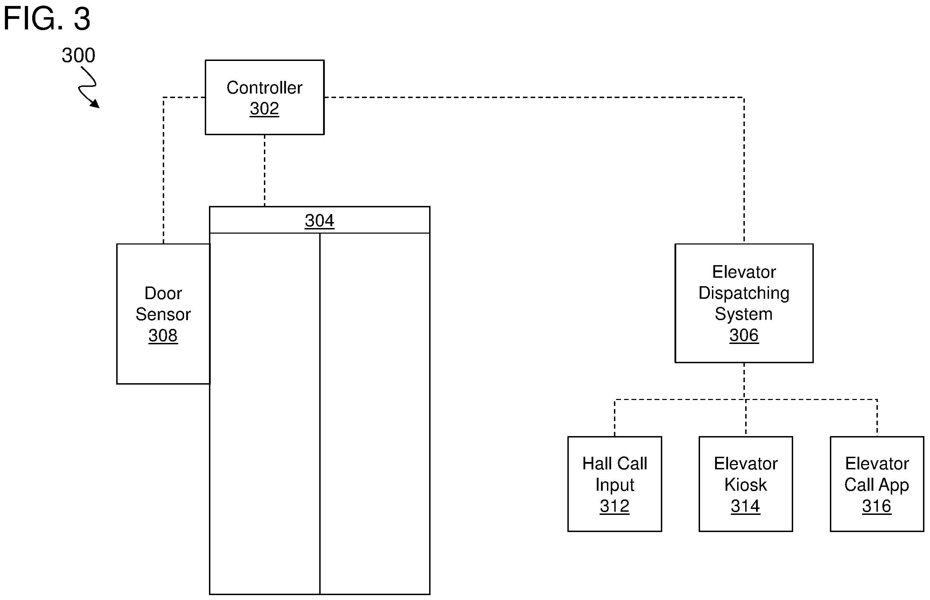

Turning now to a more detailed description of aspects of the present invention, FIG. 3 depicts an elevator system 300 according to one or more embodiments. The elevator system 300 includes a controller 302, an elevator car 304 with automatic doors, an elevator dispatching system 306, and a door sensor 308. While the illustrated example shows one door sensor 308, any number of door sensors can be utilized for the elevator system 300. In one or more embodiments, the controller 302 can be the elevator controller configured to operate the elevator controls including scheduling stops at different floors within a hoistway. In other embodiments, the controller 302 can be utilized for controlling the automatic doors only and be in electronic communication with a separate elevator controller or system, such as the elevator dispatching system 306. That is to say, the controller 302 can be located on a cloud computing server or be local to the elevator car 304 or building. In one or more embodiments, the elevator dispatching system 306 is utilized to allow passengers to call for an elevator car 304. The elevator dispatch system 306 can be operated by a hall call input 312 such as, for example, a button near the elevator car 304. Passengers can simply press the button to call an elevator car which will then be dispatched to the floor of the passenger. In some embodiments, the elevator dispatching system 306 can utilize an elevator kiosk 314 to allow passengers to enter a destination floor and to assign an elevator car to the passenger, for example. And in some embodiments, the elevator dispatching system 306 can be operated through an elevator call app 316 on a passenger smart phone or other user device.

In one or more embodiments, the door sensor 308 is configured to detect the presence of an object within a pathway for the automatic doors of the elevator car 304. The object can be a passenger or any object entering or exiting the elevator car 304. The door sensor 308 can be a light beam sensor or can be any other sensor. For example, the door sensor might be configured to sense passengers in a hallway or lobby area. In one or more embodiments, a number of other sensors can be utilized for determining the presence of passengers in the hall way or lobby that are waiting for an elevator car. As described above and herein, the door sensor 308 can be a camera, for example, mounted in the elevator lobby for the elevator car 304 or can be mounted in the elevator car 304, or both. The camera (e.g., sensor) can be utilized to determine passenger transfers for the elevator car 304 and also determine passengers in the lobby or hallway that are waiting to enter an elevator car 304.

In one or more embodiments, the controller 302 can be configured to operate the elevator car 304 automatic doors or can communicate with another system or controller for operation of the elevator car 304 automatic doors. As such, the controller 302 can determine an initial boarding time allowance (sometimes referred to herein, as "transfer time allowance"). The boarding time allowance (BTA) can be associated with the elevator kiosk 314. In one or more embodiments, an elevator lobby can have multiple elevator kiosks throughout the lobby for passengers to request an elevator and enter a destination floor. The elevator kiosk will then assign the passenger to an elevator location (e.g., go to elevator car 5). The boarding time allowance represents the travel time from the kiosk where the elevator call was inputted to the respective elevator car that was assigned to the passenger. The boarding time allowance determines the time for when the elevator door initiates closing. That is to say, the duration time of the boarding time allowance starts from the inputting the request for an elevator to the start of the elevator car door closing (or the initiate close time (ICT)). In one or more embodiments, the calculation of the initiate close time (ICT) is: ICT = max { [door fully open time] + [minimum door open time], [passenger 1 call time] + [BTA 1], [passenger 2 call time] + [BTA 2], ... [passenger N call time] + [BTA N] }. The ICT depends on the number of passengers assigned to the elevator. Note that the BTA values are not constant for all passengers 1...N because the BTA depends on the distance between the kiosk and the assigned elevator. It also depends on the walking speed of the passenger, hence the BTA may also be based on the passenger. At many kiosks, it is required for a passenger to swipe/scan a badge to grant access to certain floors, hence it is possible to learn the walking speed for individual passengers and can utilizes this as a factor when determining the BTA.

In one or more embodiments, the controller 302 determines and tunes the BTA for each elevator kiosk 314 in an elevator lobby or floor and, in some embodiments, tunes the BTA for specific passengers. The controller 302 utilizing the door sensor 308 can determine when a passenger transfer occurs for the elevator car 304. The controller 302 can associate the passenger transfer or transfers to an elevator call at an elevator kiosk 314 if there is one kiosk being utilized. The time points of the transfers will allow the controller 302 to determine if the BTA would need to be adjusted because passengers are arriving early or are arriving late causing door reversals or missed connections. For example, if an elevator kiosk 314 receives a call request and assigns a passenger to an elevator car and no transfers occur or occurs as the doors are closing, the controller 302 can determine that the BTA from the location of the kiosk to the location of the elevator car might be too short. In another example, if an elevator car is assigned to two passengers with two requests where the two requests originated from two different kiosk locations, the passenger transfers that do occur might not be associated with a specific kiosk because the controller 302 would not be able to determine which passenger is transferring. Thus, in this example, the data collected for these passenger transfers may be discarded as this data would not be accurately associated with a specific kiosk. As mentioned above, however, sensors (e.g., cameras) can be utilized to determine an identity or some unique identifying information of a passenger for a request from a kiosk and the passenger transfers that occur can be associated with the kiosk when it is determined that the requesting passenger transfers after originating from the kiosk.

In one or more embodiments, an adjustment to the BTA can occur each time a passenger transfer is logged or can occur over time as a number of samples are collected. For example, a total of 10 samples with an average BTA would need to be collected before making an adjustment to the BTA. In one or more embodiments, outlier BTA can be discarded if the outlier is beyond a standard deviation threshold of a distribution of passenger transfer times. For example, if historical BTAs occur on average of around 4 seconds with a standard deviation of 0.2 second. A standard deviation threshold of 6 can be set and any passenger transfer times before 2.8 seconds and after 5.2 second could be discarded, for example. Any passenger transfer timing data that is not an outlier can be included in the historical BTA distribution. However, there may be instances of elevator door cycles that include confounding data. For example, in the case where there are two elevator calls to the same elevator from two different kiosks, there is a late arrival (e.g., someone tried to board when the doors were closing). In this case, distinguishing if the BTA was too short for the first passenger or the second passenger can be a challenge and these data points may be discarded from this door cycle. Instead, a case that will not be discarded is when all of the passengers assigned to the car used the same kiosk. In this case, data points for the time of the arrival of the last boarding (transfer) can be compared with the time of the call request. The BTA for the last passenger should be at least this amount. In some embodiments, a body of historical data can be stored in a memory associated with the controller 302. A statistical analysis can be performed on the historical data to determine a distribution of BTAs associated with a kiosk and elevator car pair. Based on this distribution, an average BTA can be determined and utilized for tuning for the kiosk and elevator car doors. The BTA can be set at a certain threshold standard deviation, for example. In another example where the distribution is not symmetric, the threshold can be determined at a certain percentile level of the distribution. In addition and in some embodiments, besides BTA, a minimum door open time (MDOT) can be monitored and determined. With this parameter, the ICT calculation can be driven by the [door fully open time] + NMOT term. How quickly passengers can board can be learned if the controller 302 determines that the passengers are all waiting in front of the elevator and tune MDOT accordingly.

In one or more embodiments, the timing parameters for the elevator car 304 automatic door can be floor specific. The timing parameters can be floor-specific simply because the kiosk locations and even the number of kiosks can vary from floor to floor. For example, a lobby of a building typically has a different configuration and different decorations than the other floors in the building. A lobby may have heavy door decorations that affect the closing speed of the elevator car 304 automatic door. The timing parameters (e.g., door open duration time, historical or average passenger transfer timing, etc.) can be different for each floor. In addition, certain floors may have faster walking passengers versus other floors depending on the occupancy of the floor. Based on this, the timing parameters are floor specific in that each floor tracks and adjusts the BTA separately. In one or more embodiments, for buildings with multiple elevator cars serving multiple floors, the BTAs can be specific to the elevator car, itself. The elevator cars that are positioned further from a hall call button 312, kiosk 314, or building entry way (e.g., for calls from passenger smart devices) may require longer door open duration times. With each elevator car 304 tracking their own timing parameters, the elevator cars more distant from the location for calling an elevator will be self-tuned to have longer door open durations verses elevator cars closer to the hall call location.

In one or more embodiments, for elevator calls that originate from an app on a user device, positioning data of the user device can be utilized to calculate the BTA between the positioning data and the assigned elevator car. This data can be collected to determine general areas within a building and pair them with the elevator cars in the building to determine BTAs for these pairings.

In one or more embodiments, an additional aspect of the system 300 includes passing the learning (historical BTAs) data back to the elevator dispatch system (dispatcher). The dispatcher, in making its dispatching decisions (i.e., assigning which car should serve a passenger request), typically makes predictions of what happens when the call is assigned to a car. For example, if car A and car B are both available, if it thinks that the walking time from the kiosk to car A is 10 seconds and the walking time from the kiosk to car B is 15 seconds, it will typically assign car A to minimize the "time to destination" for the passenger. However, as the tuning system learns the actual walking times are different (e.g., the walking time from the kiosk to car A is actually 18 seconds since there are new obstacles in the lobby), this information could not only benefit the door timing controller but also the dispatcher's prediction about the implications of assigning future calls to a particular car. In one or more embodiments, the learning data can be utilized by the dispatcher for future elevator calls in addition for door timing control.

In one or more embodiments, the controller 302, passenger detection system 306, and elevator call entry device 308 can be implemented on the processing system 200 found in FIG. 2. Additionally, a cloud computing system can be in wired or wireless electronic communication with one or all of the elements of the system 300. Cloud computing can supplement, support or replace some or all of the functionality of the elements of the system 300. Additionally, some or all of the functionality of the elements of system 300 can be implemented as a node of a cloud computing system. A cloud computing node is only one example of a suitable cloud computing node and is not intended to suggest any limitation as to the scope of use or functionality of embodiments described herein.

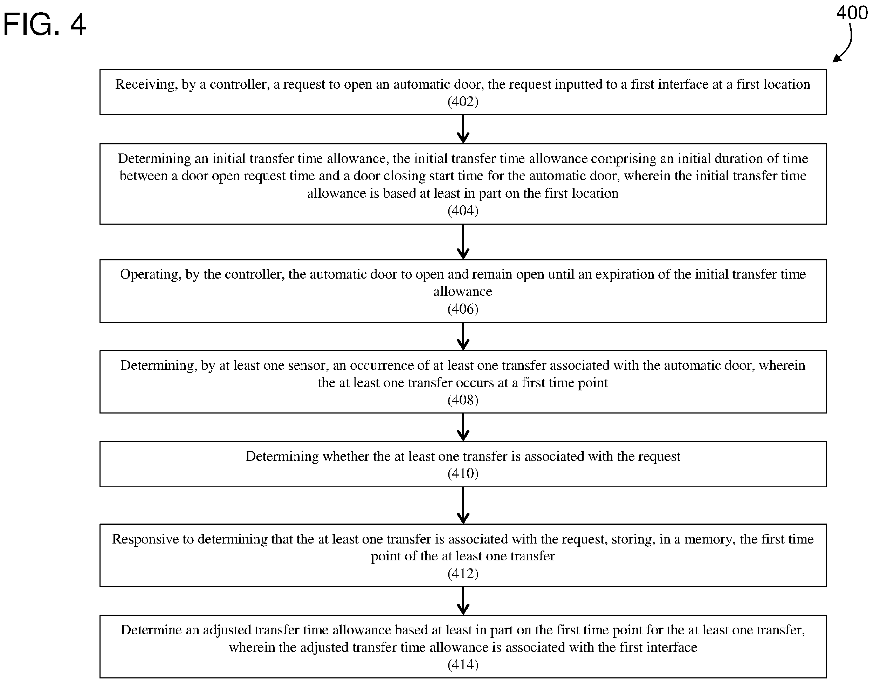

FIG. 4 depicts a flow diagram of a method for tuning an automatic door according to one or more embodiments of the present invention. The method 400 includes receiving, by a controller, a request to open an automatic door, the request inputted to a first interface at a first location, as shown in block 402. At block 404, the method 400 includes determining an initial transfer time allowance, the initial transfer time allowance comprising an initial duration of time between a door open request time and a door closing start time for the automatic door, wherein the initial transfer time allowance is based at least in part on the first location. As shown in block 406, the method 400 includes operating, by the controller, the automatic door to open and remain open until an expiration of the initial transfer time allowance. At block 408, the method 400 includes determining, by at least one sensor, an occurrence of at least one transfer associated with the automatic door, wherein the at least one transfer occurs at a first time point. At block 410, the method 400 includes determining whether an association exists between the at least one transfer and the request. The method 400 includes determining a duration of time between the request and the first time point of the at least one transfer, as shown at block 412. And at block 414, the method 400 includes determining an adjusted transfer time allowance based at least in part on duration of time, wherein the adjusted transfer time allowance is associated with the first interface.

Additional processes may also be included. It should be understood that the processes depicted in FIG. 4 represent illustrations and that other processes may be added or existing processes may be removed, modified, or rearranged without departing from the present disclosure.

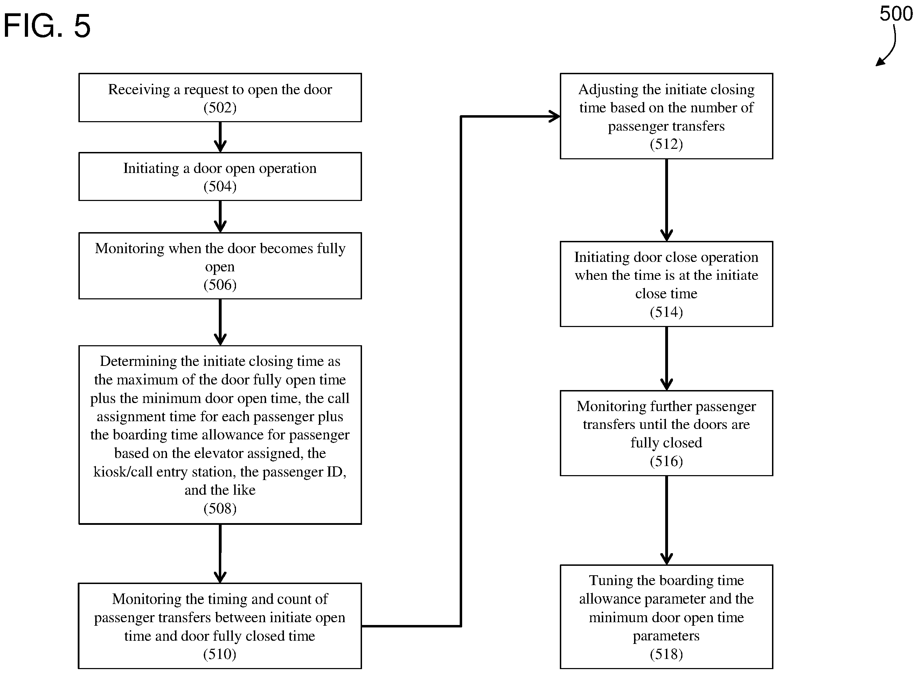

FIG. 5 depicts a flow diagram of another method for tuning an automatic door according to one or more embodiments. The method 500 includes receiving a request to open the door, as shown in block 502. The method 500 then, at block 504, includes initiating a door open operation. Note that the initiating a door open operation often does not occur immediately after receiving a request since the elevator may not be located at the floor of the request. In this case, the controller would wait until the elevator has been directed to move to and stop at the floor of the request. At block 506, the method 500 includes monitoring when the door becomes fully open. The method 500 also includes determining the initiate closing time as the maximum of the door fully open time plus the minimum door open time and of the sum of the call assignment time for each passenger plus the boarding time allowance for the passenger based on the elevator assigned, the kiosk/call entry station, the passenger ID, the time of day, and the like, as shown in block 508. And at block 510, the method 500 includes monitoring the timing and count of passenger transfers between initiate open time and door fully closed time. Then, at block 512, the method 500 includes adjusting the initiate closing time based on the number of passenger transfers. That is to say, increase the time if fewer passengers than expected have transferred or immediately close the doors if enough passengers have boarded. At block 514, the method 500 includes initiating door close operation when the time is at the initiate close time. Also, at block 516, the method 500 includes monitoring further passenger transfers (e.g., late arrivals as the doors are closing) until the doors are fully closed. And at block 518, the method 500 includes tuning the boarding time allowance parameter and the minimum door open time parameters.

In one or more embodiments, the tuning system "learns" from the transfer timing. In some embodiments, method step 512 is an optional step where the modification of the prescribed timing occurs if enough passengers have boarded (close the doors) or too few passengers have boarded (keep the doors open). The system 300 has the opportunity to learn if these adjustments are worthwhile. For example, if there were 3 calls but only 2 have boarded at the planned initiate close time and the doors are held open for 2 more seconds, the system 300 can learn if it was worthwhile (i.e., a slow walker made it) or not (if the doors are held open for the 2 extra seconds but no one boarded). Hence, the system 300 can tune the door extension timing. Conversely, if 3 people boarded quickly and the system 300 closes the doors immediately, but more people attempt to board as the doors are closing (or Door Open button presses followed by people boarding), the system 300 learns that if there are 3 calls, the system 300 cannot assume that detecting 3 boardings is enough since there is a need to account for the fact that each call may correspond with a group of passengers.

Additional processes may also be included. It should be understood that the processes depicted in FIG. 5 represent illustrations and that other processes may be added or existing processes may be removed, modified, or rearranged without departing from the present disclosure.

In one or more embodiments, the automatic door tuning system 300 described herein can be utilized for determining door open time durations for additional application such as, for example, opening of automatic doors for buildings, and the like. In addition, the automatic door tuning system 300 can be utilized for detecting and predicting passengers for trains, subways, and other vehicles. For example, automatic access doors that have handicapped buttons on both sides of the door can utilize these methods. Often times, the buttons are not ideally positioned and the timing on one side of the door should be different than the other. With tuning, the right parameters can be determined without manual commissioning and adjustment which is error-prone and tedious.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The present invention will include all embodiments falling within the scope of the claims.

## Claims

1. An automatic door tuning system (300) comprising:
a controller (302) configured to operate an automatic door; and
at least one sensor (308) configured to detect a presence of a person in and around a pathway of the automatic door;
wherein the controller (302) is configured to:
receive a request to open the automatic door, the request inputted to a first interface (306) at a first location, wherein the automatic door is located at a second location;
determine an initial transfer time allowance, the initial transfer time allowance comprising an initial duration of time between a door open request time and a door closing start time for the automatic door, wherein the initial transfer time allowance is based at least in part on the first location;
operate the automatic door to open and remain open at least until an expiration of the initial transfer time allowance;
**characterized in that** the controller is further configured to
determine, by the at least one sensor (308), an occurrence of at least one transfer associated with the automatic door, wherein the at least one transfer is the movement of a passenger through the automatic door and occurs at a first time point;
determine whether an association exists between the at least one transfer and the request;
determine a duration of time between the request and the first time point of the at least one transfer; and
determine an adjusted transfer time allowance based at least in part on the duration of time, wherein the adjusted transfer time allowance is associated with the first interface (306).

2. The automatic door tuning system of Claim 1, wherein the controller (302) is further configured to:
responsive to determining that the association exists between the at least one transfer and the request, storing the duration of time.

3. The automatic door tuning system of Claim 1 or 2, wherein the controller (302) is further configured to:
responsive to determining that the association does not exists between the at least one transfer and the request, discarding the duration of time.

4. The automatic door tuning system of Claim 1, 2 or 3, wherein the determining whether the at least one transfer is associated with the request comprises:
determining, by the at least one sensor (308), a direction of the at least one transfer; and
associating the at least one transfer with the request based on a determination that the direction of the least one transfer comprises an ingress transfer for the automatic door, wherein the ingress transfer comprises a transfer in a direction opposite a side of the automatic door where the request originated.

5. The automatic door tuning system of any preceding Claim, wherein the controller (302) is further configured to:
receive a second request to open the automatic door, the second request inputted to the first interface (306) at the first location;
operate the automatic door to open and remain open at least until an expiration of the adjusted transfer allowance time;
determine an occurrence of a second transfer associated with the automatic door, wherein the second transfer occurs at a second time point;
determine whether an association exists between the second transfer and the second request;
determine a second duration of time between the second request and the second time point of the second transfer; and
determine a second adjusted transfer time allowance based at least in part on the second duration of time, wherein the second adjusted transfer time allowance is associated with the first interface.

6. The automatic door tuning system of any preceding Claim, wherein the controller (302) is further configured to:
determine identifying information of a requestor associated with the request to open the automatic door;
associate the adjusted transfer time allowance with the requestor.

7. The automatic door tuning system of Claim 6, wherein determining the identifying information of the requestor associated with the request comprises:
obtaining, by a camera, image data associated with the requestor; and
analyzing, utilizing a facial recognition algorithm, the image data associated with the requestor to determine the identifying information.

8. The automatic door tuning system of Claim 6 or 7, wherein determining the identifying information of the requestor associated with the request comprises:
analyzing an input mechanism associated with the request at the first interface (306), wherein the input mechanism comprises an identification badge associated with the requestor; and
determining the identifying information of the requested based at least in part on the input mechanism.

9. The automatic door tuning system of any preceding Claim, wherein the first interface comprises a kiosk (314).

10. The automatic door tuning system of any preceding Claim, wherein the automatic door comprises an elevator car door for an elevator car (304) in an elevator system.

11. The automatic door tuning system of Claim 10, wherein the controller (302) is further configured to:
control operation of the elevator car based at least in part on the adjusted transfer time allowance.

12. The automatic door tuning system of any preceding Claim, wherein the at least one sensor (308) comprises at least one of a light sensor, a pressure sensor, a three-dimensional depth sensor, a passive infrared sensor, an acoustic sensor, a radar sensor, a near-field capacitance sensor, a proximity sensing of wireless communication signals sensor, and a camera.

13. A method for tuning an automatic door, the method comprising:
receiving, by a controller (302), a request to open an automatic door, the request inputted to a first interface (306) at a first location;
determining an initial transfer time allowance, the initial transfer time allowance comprising an initial duration of time between a door open request time and a door closing start time for the automatic door, wherein the initial transfer time allowance is based at least in part on the first location;
operating, by the controller (302), the automatic door to open and remain open at least until an expiration of the initial transfer time allowance;
**characterized by**
determining, by at least one sensor (308), an occurrence of at least one transfer associated with the automatic door, wherein the at least one transfer is the movement of a passenger through the automatic door and occurs at a first time point;
determining whether an association exists between the at least one transfer and the request;
determining a duration of time between the request and the first time point of the at least one transfer; and
determining an adjusted transfer time allowance based at least in part on duration of time, wherein the adjusted transfer time allowance is associated with the first interface (306).

14. The method of Claim 13, further comprising:
responsive to determining that the association exists between the at least one transfer and the request, storing the duration of time; and/or
responsive to determining that the association does not exists between the at least one transfer and the request, discarding the duration of time.

15. The method of Claim 13 or 14, wherein the first interface comprises at least one of a kiosk (314) and a user device.

## Patentansprüche

1. Automatisches Türabstimmsystem (300), umfassend:
eine Steuereinheit (302), die zum Betreiben einer automatischen Tür konfiguriert ist; und
mindestens einen Sensor (308), der zum Erkennen einer Anwesenheit einer Person in und um einen Weg der automatischen Tür konfiguriert ist;
wobei die Steuereinheit (302) konfiguriert ist zum:
Empfangen einer Anforderung zum Öffnen der automatischen Tür, wobei die Anforderung in eine erste Schnittstelle (306) an einem ersten Ort eingegeben wird, wobei sich die automatische Tür an einem zweiten Ort befindet;
Ermitteln einer anfänglichen Übergangszeitzugabe, wobei die anfängliche Übergangszeitzugabe eine anfängliche Zeitdauer zwischen einer Türöffnungsanforderungszeit und einer Türschließstartzeit für die automatische Tür umfasst, wobei die anfängliche Übergangszeitzugabe mindestens teilweise auf dem ersten Ort basiert;
Betätigen der automatischen Tür, um sie zu öffnen und mindestens bis zu einem Ablauf der anfänglichen Übergangszeitzugabe geöffnet zu halten;
**dadurch gekennzeichnet, dass** die Steuereinheit ferner konfiguriert zum
Ermitteln, durch den mindestens einen Sensor (308), eines Auftretens mindestens eines Übergangs, der der automatischen Tür zugeordnet ist, wobei der mindestens eine Übergang die Bewegung eines Passagiers durch die automatische Tür ist und zu einem ersten Zeitpunkt auftritt;
Ermitteln, ob eine Zuordnung zwischen dem mindestens einen Übergang und der Anforderung besteht;
Ermitteln einer Zeitdauer zwischen der Anforderung und dem ersten Zeitpunkt des mindestens einen Übergangs; und
Ermitteln einer angepassten Übergangszeitzugabe basierend mindestens teilweise auf der Zeitdauer, wobei die angepasste Übergangszeitzugabe der ersten Schnittstelle (306) zugeordnet ist.

2. Automatisches Türabstimmsystem nach Anspruch 1, wobei die Steuereinheit (302) ferner konfiguriert ist zum:
als Reaktion auf das Ermitteln, dass die Zuordnung zwischen dem mindestens einen Übergang und der Anforderung besteht, Speichern der Zeitdauer.

3. Automatisches Türabstimmsystem nach Anspruch 1 oder 2, wobei die Steuereinheit (302) ferner konfiguriert ist zum:
als Reaktion auf das Ermitteln, dass die Zuordnung zwischen dem mindestens einen Übergang und der Anforderung nicht besteht, Verwerfen der Zeitdauer.

4. Automatisches Türabstimmungssystem nach Anspruch 1, 2 oder 3, wobei das Ermitteln, ob der mindestens eine Übergang der Anforderung zugeordnet ist, umfasst:
Ermitteln, durch den mindestens einen Sensor (308), einer Richtung des mindestens einen Übergangs; und
Zuordnen des mindestens einen Übergangs zu der Anfrage basierend auf einer Ermittlung, dass die Richtung des mindestens einen Übergangs einen Eintrittsübergang für die automatische Tür umfasst, wobei der Eintrittsübergang einen Übergang in einer Richtung umfasst, die einer Seite der automatischen Tür gegenüberliegt, von der Anforderung stammt.

5. Automatisches Türabstimmsystem nach einem der vorhergehenden Ansprüche, wobei die Steuereinheit (302) ferner konfiguriert ist zum:
Empfangen einer zweiten Anforderung zum Öffnen der automatischen Tür, wobei die zweite Anforderung in die erste Schnittstelle (306) am ersten Ort eingegeben wird;
Betätigen der automatischen Tür, um sie zu öffnen und mindestens bis zu einem Ablauf der angepassten Übergangszeitzugabe geöffnet zu halten;
Ermitteln eines Auftretens eines zweiten Übergangs, der der automatischen Tür zugeordnet ist, wobei der zweite Übergang zu einem zweiten Zeitpunkt auftritt;
Ermitteln, ob eine Zuordnung zwischen dem zweiten Übergang und der zweiten Anforderung besteht;
Ermitteln einer zweiten Zeitdauer zwischen der zweiten Anforderung und dem zweiten Zeitpunkt des zweiten Übergangs; und
Ermitteln einer zweiten angepassten Übergangszeitzugabe basierend mindestens teilweise auf der zweiten Zeitdauer, wobei die zweite angepasste Übergangszeitzugabe der ersten Schnittstelle zugeordnet ist.

6. Automatisches Türabstimmsystem nach einem der vorhergehenden Ansprüche, wobei die Steuereinheit (302) ferner konfiguriert ist zum:
Ermitteln von Identifikationsinformationen eines Anforderers, der der Anforderung zum Öffnen der automatischen Tür zugeordnet ist;
Zuordnen der angepassten Übergangszeitzugabe zu dem Anforderer.

7. Automatisches Türabstimmsystem nach Anspruch 6, wobei das Ermitteln der Identifizierungsinformationen des Anforderers, der der Anforderung zugeordnet ist, umfasst:
Erlangen, durch eine Kamera, von Bilddaten, die dem Anforderer zugeordnet sind; und
Analysieren der dem Anforderer zugeordneten Bilddaten unter Verwendung eines Gesichtserkennungsalgorithmus, um die Identifizierungsinformationen zu ermitteln.

8. Automatisches Türabstimmsystem nach Anspruch 6 oder 7, wobei das Ermitteln der Identifizierungsinformationen des Anforderers, der der Anforderung zugeordnet ist, umfasst:
Analysieren eines der Anforderung zugeordneten Eingabemechanismus an der ersten Schnittstelle (306), wobei der Eingabemechanismus ein dem Anforderer zugeordnetes Identifikationskennzeichen umfasst; und
Ermitteln der Identifizierungsinformationen des Angeforderten basierend mindestens teilweise auf dem Eingabemechanismus.

9. Automatisches Türabstimmsystem nach einem der vorhergehenden Ansprüche, wobei die erste Schnittstelle einen Kiosk (314) umfasst.

10. Automatisches Türabstimmsystem nach einem der vorhergehenden Ansprüche, wobei die automatische Tür eine Aufzugskabinentür für eine Aufzugskabine (304) in einem Aufzugssystem umfasst.

11. Automatisches Türabstimmsystem nach Anspruch 10, wobei die Steuereinheit (302) ferner konfiguriert ist zum:
Steuern des Betriebs der Aufzugskabine basierend mindestens teilweise auf der angepassten Übergangszeitzugabe.

12. Automatisches Türabstimmsystem nach einem der vorhergehenden Ansprüche, wobei der mindestens eine Sensor (308) mindestens einen Lichtsensor, einen Drucksensor, einen dreidimensionalen Tiefensensor, einen passiven Infrarotsensor, einen akustischen Sensor, einen Radarsensor, einen Nahfeld-Kapazitätssensor, eine Näherungserfassung eines Sensors für Drahtloskommunikationssignale und eine Kamera umfasst.

13. Verfahren zum Abstimmen einer automatischen Tür, wobei das Verfahren umfasst:
Empfangen, durch eine Steuereinheit (302), einer Anforderung zum Öffnen einer automatischen Tür, wobei die Anforderung in eine erste Schnittstelle (306) an einer ersten Stelle eingegeben wird;
Ermitteln einer anfänglichen Übergangszeitzugabe, wobei die anfängliche Übergangszeitzugabe eine anfängliche Zeitdauer zwischen einer Türöffnungsanforderungszeit und einer Türschließstartzeit für die automatische Tür umfasst, wobei die anfängliche Übergangszeitzugabe mindestens teilweise auf dem ersten Ort basiert;
Betätigen, durch die Steuereinheit (302), der automatischen Tür, um sie zu öffnen und mindestens bis zu einem Ablauf der anfänglichen Übergangszeitzugabe geöffnet zu halten;
**gekennzeichnet durch**
Ermitteln, durch mindestens einen Sensor (308), eines Auftretens mindestens eines Übergangs, der der automatischen Tür zugeordnet ist, wobei der mindestens eine Übergang die Bewegung eines Passagiers durch die automatische Tür ist und zu einem ersten Zeitpunkt auftritt;
Ermitteln, ob eine Zuordnung zwischen dem mindestens einen Übergang und der Anforderung besteht;
Ermitteln einer Zeitdauer zwischen der Anforderung und dem ersten Zeitpunkt des mindestens einen Übergangs; und
Ermitteln einer angepassten Übergangszeitzugabe basierend mindestens teilweise auf der Zeitdauer, wobei die angepasste Übergangszeitzugabe der ersten Schnittstelle (306) zugeordnet ist.

14. Verfahren nach Anspruch 13, ferner umfassend:
als Reaktion auf das Ermitteln, dass die Zuordnung zwischen dem mindestens einen Übergang und der Anforderung besteht, Speichern der Zeitdauer; und/oder
als Reaktion auf das Ermitteln, dass die Zuordnung zwischen dem mindestens einen Übergang und der Anforderung nicht besteht, Verwerfen der Zeitdauer.

15. Verfahren nach Anspruch 13 oder 14, wobei die erste Schnittstelle mindestens einen Kiosk (314) und/oder eine Benutzervorrichtung umfasst.

## Revendications

1. Système de réglage de porte automatique (300) comprenant :
un dispositif de commande (302) configuré pour actionner une porte automatique ; et
au moins un capteur (308) configuré pour détecter la présence d'une personne dans et autour d'un parcours de la porte automatique ;
dans lequel le dispositif de commande (302) est configuré pour :
recevoir une demande d'ouverture de la porte automatique, la demande étant entrée sur une première interface (306) à un premier emplacement, la porte automatique étant située à un deuxième emplacement ;
déterminer une allocation de temps de transfert initial, l'allocation de temps de transfert initial comprenant une durée initiale entre un temps de demande d'ouverture de porte et une heure de début de fermeture de porte pour la porte automatique, dans lequel l'allocation de temps de transfert initial est basée au moins en partie sur le premier emplacement ;
actionner la porte automatique pour qu'elle s'ouvre et reste ouverte au moins jusqu'à l'expiration de l'allocation de temps de transfert initial ;
**caractérisé en ce que** le dispositif de commande est en outre configuré pour
déterminer, par l'au moins un capteur (308), une occurrence d'au moins un transfert associé à la porte automatique, dans lequel l'au moins un transfert est le mouvement d'un passager à travers la porte automatique et se produit à un premier instant ;
déterminer si une association existe entre l'au moins un transfert et la demande ;
déterminer une durée entre la demande et le premier instant de l'au moins un transfert ; et
déterminer une allocation de temps de transfert ajusté sur la base au moins en partie de la durée, l'allocation de temps de transfert ajusté étant associée à la première interface (306).

2. Système de réglage de porte automatique selon la revendication 1, dans lequel le dispositif de commande (302) est en outre configuré pour :
stocker la durée, en réponse à la détermination selon laquelle l'association existe entre l'au moins un transfert et la demande.

3. Système de réglage de porte automatique selon la revendication 1 ou 2, dans lequel le dispositif de commande (302) est en outre configuré pour :
ne pas tenir compte de la durée, en réponse à la détermination selon laquelle l'association n'existe pas entre l'au moins un transfert et la demande.

4. Système de réglage de porte automatique selon la revendication 1, 2 ou 3, dans lequel le fait de déterminer si l'au moins un transfert est associé à la demande comprend :
la détermination, par l'au moins un capteur (308), d'une direction de l'au moins un transfert ; et
l'association de l'au moins un transfert à la demande sur la base d'une détermination selon laquelle la direction de l'au moins un transfert comprend un transfert d'entrée pour la porte automatique, le transfert d'entrée comprenant un transfert dans une direction opposée à un côté de la porte automatique d'où provient la demande.

5. Système de réglage de porte automatique selon une quelconque revendication précédente, dans lequel le dispositif de commande (302) est en outre configuré pour :
recevoir une seconde demande d'ouverture de la porte automatique, la seconde demande étant entrée sur la première interface (306) au premier emplacement ;
actionner la porte automatique pour qu'elle s'ouvre et reste ouverte au moins jusqu'à l'expiration de l'allocation de temps de transfert ajusté ;
déterminer une occurrence d'un second transfert associé à la porte automatique, le second transfert se produisant à un second instant ;
déterminer si une association existe entre le second transfert et la seconde demande ;
déterminer une seconde durée entre la seconde demande et le second instant du second transfert ; et
déterminer une seconde allocation de temps de transfert ajusté sur la base au moins en partie de la seconde durée, la seconde allocation de temps de transfert ajusté étant associée à la première interface.

6. Système de réglage de porte automatique selon une quelconque revendication précédente, dans lequel le dispositif de commande (302) est en outre configuré pour :
déterminer des informations d'identification d'un demandeur associées à la demande d'ouverture de la porte automatique ;
associer l'allocation de temps de transfert ajusté au demandeur.

7. Système de réglage de porte automatique selon la revendication 6, dans lequel la détermination des informations d'identification du demandeur associées à la demande comprend :
l'obtention, par une caméra, de données d'image associées au demandeur ; et
l'analyse, à l'aide d'un algorithme de reconnaissance faciale, des données d'image associées au demandeur pour déterminer les informations d'identification.

8. Système de réglage de porte automatique selon la revendication 6 ou 7, dans lequel la détermination des informations d'identification du demandeur associées à la demande comprend :
l'analyse d'un mécanisme d'entrée associé à la demande au niveau de la première interface (306), dans lequel le mécanisme d'entrée comprend un badge d'identification associé au demandeur ; et
la détermination des informations d'identification de la demande sur la base au moins en partie du mécanisme d'entrée.

9. Système de réglage de porte automatique selon une quelconque revendication précédente, dans lequel la première interface comprend un kiosque (314).

10. Système de réglage de porte automatique selon une quelconque revendication précédente, dans lequel la porte automatique comprend une porte de cabine d'ascenseur pour une cabine d'ascenseur (304) dans un système d'ascenseur.

11. Système de réglage de porte automatique selon la revendication 10, dans lequel le dispositif de commande (302) est en outre configuré pour :
commander le fonctionnement de la cabine d'ascenseur sur la base au moins en partie de l'allocation de temps de transfert ajusté.

12. Système de réglage de porte automatique selon une quelconque revendication précédente, dans lequel l'au moins un capteur (308) comprend au moins un capteur de lumière et/ou un capteur de pression et/ou un capteur de profondeur tridimensionnel et/ou un capteur infrarouge passif et/ou un capteur acoustique et/ou un capteur de radar et/ou un capteur capacitif en champ proche et/ou un capteur de détection de proximité de signaux de communication sans fil et une caméra.

13. Procédé de réglage d'une porte automatique, le procédé comprenant :
la réception, par un dispositif de commande (302), d'une demande d'ouverture d'une porte automatique, la demande étant entrée sur une première interface (306) à un premier emplacement ;
la détermination d'une allocation de temps de transfert initial, l'allocation de temps de transfert initial comprenant une durée initiale de temps entre un temps de demande d'ouverture de porte et une heure de début de fermeture de porte pour la porte automatique, dans lequel l'allocation de temps de transfert initial est basée au moins en partie sur le premier emplacement ; l'actionnement, par le dispositif de commande (302), de la porte automatique pour qu'elle s'ouvre et reste ouverte au moins jusqu'à l'expiration de l'allocation de temps de transfert initial ;
**caractérisé par**
la détermination, par au moins un capteur (308), d'une occurrence d'au moins un transfert associé à la porte automatique, dans lequel l'au moins un transfert est le mouvement d'un passager à travers la porte automatique et se produit à un premier instant ;
le fait de déterminer si une association existe entre l'au moins un transfert et la demande ;
la détermination d'une durée de temps entre la demande et le premier instant de l'au moins un transfert ; et
la détermination d'une allocation de temps de transfert ajusté sur la base au moins en partie de la durée, l'allocation de temps de transfert ajusté étant associée à la première interface (306) .

14. Procédé selon la revendication 13, comprenant en outre :
le stockage de la durée, en réponse à la détermination selon laquelle l'association existe entre l'au moins un transfert et la demande ; et/ou
la non-prise en compte de la durée, en réponse à la détermination selon laquelle l'association n'existe pas entre l'au moins un transfert et la demande.

15. Procédé selon la revendication 13 ou 14, dans lequel la première interface comprend au moins un kiosque (314) et/ou un dispositif utilisateur.
